# EUROPEAN PATENT APPLICATION

(11) **EP 4 822 545 A1**
(43) Date of publication of application: **14.10.2026**
(21) Application number: 25305513.1
(22) Date of filing: 09.04.2025
(51) Int. Cl.: G06F 11/3604

(54) **COMPUTER PROGRAM VERIFICATION METHOD WITH ERROR VERIFICATION DIRECTIVES, APPARATUS AND CORRESPONDING COMPUTER PROGRAM**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: FAISSOLE, Florian, 35708 Rennes Cédex 7 (FR); BOYER, Benoit, 35708 Rennes Cédex 7 (FR)
(74) Representative: Plasseraud IP

(57) **Abstract**

The disclosure relates to a computer program verification method, the computer program verification method comprising,
- a computer program transformation phase (P01) in which an input program (InPrg) that comprises at least one function call to at least one abstract mathematical function (*fᵢ*) is transformed in *an output program (OutPrg), the output program (OutPrg) comprising at least one call to a lower precision implementation *f̂ᵢ* of the at least one mathematical function *fᵢ* and at least one error verification directives (evd) linked to the lower precision implementation *f̂ᵢ* of the at least one mathematical function *fᵢ*,
- a computer program verification phase (P02) in which the output program (OutPrg) is provided to a formal verification module (FVM), the formal verification module (FVM) using the error verification directives (evd) to ensure correctness (cor) of the input program (InPrg).

## Description

### Domain of the invention

The present disclosure relates to computer program verification technologies, specifically focusing on verification-oriented over-approximations of mathematical instructions within factory automation systems.

### Prior Art

In the domain of computer program verification, particularly within factory automation systems, ensuring the correctness of an implementation of a computer program presents significant difficulties. Indeed, programs often include calls to complex mathematical functions such as cosine, sine, exponential, and logarithmic functions.

These functions are typically implemented, in the effective execution architecture (e.g. x86) of the computer program, using highly accurate and efficient libraries tailored for these computing architectures. However, the complexity and precision of these "architecture" implementations pose substantial obstacles for formal verification processes.

Indeed, not only existing verification tools face burdens in managing the complex and detailed nature of these mathematical function implementations (resulting in inefficiencies and possible inaccuracies in verification outcomes), but when such verification is achievable, time to do so results in a practical inoperative solution, because this time is too long and/or expected resources are too high.

Indeed, the verification process involves deductive reasoning using tools like Why3, which employs a specification language to transform programs into logical properties that can be reasoned about by provers. Model checking techniques, such as CBMC, utilize symbolic execution of programs to verify correctness. These methods aim to simplify the verification process, allowing tools to reason within acceptable timeframes.

But reference "architecture" implementations of mathematical functions are often highly precise and efficient, but their complexity makes formal verification challenging and time-consuming.

There is therefore a need for a streamlined approach that aids in the verification of programs containing mathematical function calls in an acceptable time and with limited resources.

### Summary of the disclosure

The disclosure allows solving at least part of the above problem.

The disclosure more specifically proposes a computer program verification method, the computer program verification method comprising:
- a computer program transformation phase in which an input program that comprises at least one function call to at least one abstract mathematical function is transformed in an output program, the output program comprising at least one call to a lower precision implementation *f̂ᵢ* of the at least one mathematical function *fᵢ* and at least one error verification directives linked to the lower precision implementation *f̂ᵢ* of the at least one mathematical function *fᵢ*,
- a computer program verification phase in which the output program is provided to a formal verification module, the formal verification module using the error verification directives to ensure correctness of the input program.

Hence, the disclosure allows obtaining an evaluation of the correctness of the input computer program, based on a "context" determined evaluation of the needs of precision of mathematical functions which are used in the program. By ensuring correctness, one should note that the result may be positive or negative, depending on the actual correctness of the input program. Since the method is a verification method, the result of the method may be positive or negative, depending on the input program to verify. In case of negative result, a programmer may make changes or update in the input program and the method of the disclosure is run again to verify the correctness of the input computer program.

According to a specific feature, the computer program transformation phase comprises:
- determining, from the input program, the lower precision implementation *f̂ᵢ* of the at least one mathematical function *fᵢ* and a computing error accuracy of the lower precision implementation *fᵢ*,
- generating the error verification directives at least from the computing error accuracy of the lower precision implementation *f̂ᵢ*.

Hence, a simplification of the effective implementations of the mathematical functions is determined, which allows lowering the computational needs for effectively verifying the input computer program

According to a specific feature, generating the error verification directives further uses a computing error accuracy of a computing architecture implementation ${{f}_{ι}}^{˜}$ of the at least one mathematical function *fᵢ*.

Hence, these computing error accuracies can be added, for the formal verification module, to ensure the correctness of the input computer program.

According to a specific feature, determining, from the input program, the lower precision implementation *f̂ᵢ* of the at least one mathematical function *fᵢ* and the computing error accuracy of the lower precision implementation *f̂ᵢ* comprises:
- determining a required internal accuracy of the at least one abstract mathematical function implemented in the input program,
- determining at least one domain of values input variables while calling the at least one abstract mathematical function,
- selecting the lower precision implementation *f̂ᵢ* of the at least one mathematical function *fᵢ* as a function of the required internal accuracy and as a function of the at least one domain of values input variables, selecting further providing the computing error accuracy.

Hence, the lower precision is determined on the fly, for example based on an oracle module, which is used to determine the actual precision required by the computer program in order to achieve its goals.

According to a specific feature, the computer program transformation phase further comprises:
- generating the output program in which the at least one function call to at least one abstract mathematical function is replaced by at least one corresponding function call to the of the lower precision implementation *f̂ᵢ*,
- adding the error verification directives to the output program.

According to a specific feature, the at least one error verification directives comprise, for each lower precision implementation *f̂ᵢ* of the at least one mathematical function *fᵢ*, at least one representation of an operation to execute by the formal verification module to ensure correctness of the input program.

According to a specific feature, for a given lower precision implementation *f̂ᵢ* of one mathematical function *fᵢ*, the representation of the operation to execute by the formal verification module comprises:
- at least one error value checking directive representing the maximum error *θ̂ᵢ* made for the given lower precision implementation *f̂ᵢ* of the mathematical function *fᵢ*,
- an error verification pragma.

According to some examples, the error verification pragma may take the form of an effective maximum value taken by the error.

According to another aspect, the disclosure also relates to a computer program verification apparatus. Such a computer program verification apparatus comprises:
- a computer program transformation module in which an input program that comprises at least one function call to at least one abstract mathematical function is transformed in an output program, the output program comprising at least one call to a lower precision implementation *f̂ᵢ* of the at least one mathematical function *fᵢ* and at least one error verification directives linked to the lower precision implementation *f̂ᵢ* of the at least one mathematical function *fᵢ*,
- a computer program verification module by which the output program is provided to a formal verification module, the formal verification module using the error verification directives to ensure correctness of the input program.

According to a preferred implementation, the various steps of the methods according to the disclosure are implemented by one or more software or computer programs, comprising software instructions intended to be executed by a data processor of a relay module according to the disclosure and being designed to control the execution of the various steps of the methods.

Consequently, the disclosure also targets a program capable of being executed by a computer or by a data processor, this program comprising instructions for controlling the execution of the steps of a method as mentioned above. This program can use any programming language, and be in the form of source code, object code, or intermediate code. The disclosure also targets an information medium readable by a data processor, and comprising instructions of a program as mentioned above. The information medium can be any entity or device capable of storing the program, for example a storage means, a microelectronic circuit, or a magnetic or optical recording means. On the other hand, the information carrier may be a transmissible medium such as an electrical or optical signal, which may be conveyed via an electrical or optical cable, by radio or by other means. The program, according to the disclosure may be downloaded from a network such as the Internet. Alternatively, the information carrier may be an integrated circuit in which the program is incorporated, the circuit being adapted to execute or to be used in the execution of the method in question. According to one embodiment, the disclosure is implemented by means of software and/or hardware components. The term "module" may correspond in this document to a software component, a hardware component or a set of hardware and software components. Each component of the system described above of course implements its own modules. The different embodiments mentioned above can be combined with each other for the implementation of the disclosure.

### Description of Drawings

Other features and advantages of the invention will appear more clearly on reading the following description of an embodiment of the invention, given as a simple illustrative and non-limiting example, and the appended drawings among which:
- Figure 1 is a representation of the verification method according to an embodiment,
- Figure 2 illustrates an input compute program according to an example
- Figure 3 represents a portion of an output program, following the transformation of a part of the input program,
- Figure 4 illustrates an apparatus for implementation of the disclosed method.

### Description of an embodiment

As previously indicated, the disclosure aims at solving some of the computer program verification issues by introducing a technique that enables the use of alternative, simpler implementations of mathematical functions, which are more suitable for verification while maintaining the integrity of the program's functionality. This approach involves transforming the input program to replace calls to complex mathematical functions with calls to simpler approximations that maintain the required precision for verification purposes. By doing so, the proposed methodology significantly reduces the time and resources required for verification, making it feasible to ensure the correctness of programs in important areas such as factory automation. This technique provides verification tools with simpler representations, enabling quicker reasoning and reducing the overall verification burden.

Generally speaking, the computer program under scrutiny is a source code, which may be written in any computer language, for instance in C, C++, Fortran, java, python computer language. For example, the computer program is meant to run on an embedded system, in order to execute tasks in relation with e.g. signal or image processing, automatic control, etc. The computer program includes assignments, control structures (conditional branches, switches, loops, etc.), mathematical operations (addition, multiplication, etc.) and uses or comprises use of implementations of mathematical functions.

More specifically, the proposed technique enables the use of alternative aggressively performant and simple implementations of mathematical functions for easing the automatic verification of algorithms that include calls to mathematical functions, and whose concrete implementations are inadequate for verification. Hence a transformation of an input program is done and the obtained corresponding outpour program is used in the verification tools or modules. The approach is applied once the target architecture, therefore, the target concrete implementations of the mathematical functions are known. According to the disclosure, a function call by function call approach is processed. For each function call f whose concrete implementation in the target architecture is *f̃* of accuracy *ε̃*, a first step of the input program transformation consists in detecting the inputs domains (using analysis techniques like abstract interpretation) of the function. Indeed, restricting the domain of the inputs (to these functions) enables the use of a simpler approximation f of known accuracy *ε̂*. A second step of the input program transformation consists in determining the simpler implementation f to be used. After having performing these two steps for all mathematical functions calls of the input program, the last step of the input program transformation consists in replacing all the calls to the concrete implementations *f̃* by a symbolic value equal to *f + θ̂ + θ̃,* for any values *θ̂* and *θ̃* such that | *θ̂* | < *ε̂* and | *θ̃* | < *ε̂*.

The obtained output program is then understandable and manageable by many verification tools, including deductive verification platforms, *e.g.,* Why3, or model-checkers, *e.g.,* CBMC. In certain embodiments, it is sufficient to know that the accuracy *ε̂* of the simpler implementation is grosser than the accuracy of the concrete implementation, *i.e., θ̃* is unknown. In this case, *f + θ̂* + *θ̃* could be replaced by *f̂* + 2*θ̂.* In certain embodiments, the accuracy of f could be formally proven to get a higher formal guarantee. In certain embodiments, the accuracy of *f̃* could be formally proven too. When using the *f +* 2*θ̂* replacement, proving the accuracy of *f* and proving that *f̃* is always more accurate than f is sufficient.

For clarity purposes, the following definitions are provided.

*fᵢ* (examples: *cos, sin, tan, arccos, arcsin, arctan, exp, log*) is the "abstract" mathematical function which is written to be called in the input computer program.${{f}_{ι}}^{˜}$ (examples: ${cos}^{˜} , {sιn}^{˜} , {tan}^{˜} , {arccos}^{˜} , {arcsιn}^{˜} , {arctan}^{˜} , {exp}^{˜} , {log}^{˜}$) is the (architectural) implementation of the mathematical function as being executed by the library associated with the computing architecture which is provided for the computing platform (for example a mathematical library "libm" for a dedicated architecture - e.g. x86, x64, **ARM,** etc.). The implementation of a mathematical function in the architecture, with a provided mathematical library is given with a known accuracy (e.g. *ε̃ₗ*). This known accuracy allows obtaining a maximum error ${{θ}_{ι}}^{˜}$ that is to be made by the implementation ${{f}_{ι}}^{˜}$ of the function *fᵢ* when executed on the dedicated architecture. With some modern architecture, a common value for ${{ϵ}_{ι}}^{˜}$ can for example be 2⁻⁵³. That means that the value provided by the implementation differs from the theoretical value from |2⁻⁵³| (positive or negative error, depending on the input). Hence, as exposed herein before, this kind of implementation is very accurate, but unusable for a verification tool since proving effectiveness of the computer program implementing these functions would be too long and resource consuming.

*f̂ᵢ* (examples: $\hat{cos} , \hat{sιn} , \hat{tan} , \hat{arccos} , \hat{arcsιn} , \hat{arctan} , \hat{exp} , \hat{log}$) is a simpler implementation of the mathematical function. This simpler implementation is for example provided by an oracle (ORA) which has the charge of finding simple implementation of function, as exposed herein. The oracle (ORA), based on input domain (i.e. range of values that can be used, in a practical way, when calling the "abstract" mathematical function) determines the implementation *f̂ᵢ* of the mathematical function *fᵢ* that is sufficient for ensuring that the results of a program function calling the *f̂ᵢ* responds to the specifications of the input program (InPrg). The simpler implementation of the mathematical function, provided by the Oracle ORA is given with a known accuracy (e.g. *ε̂ₗ*). This known lower (i.e. worst) accuracy allows obtaining a maximum error *ε̂ᵢ* that is to be made by the simpler implementation *f̂ᵢ* of the function *fᵢ*. Since the implementation *f̂ᵢ* is simpler than the implementation ${{f}_{ι}}^{˜}$ of the function *f̂ᵢ* when executed on the dedicated architecture, the accuracy (*ε̂ₗ*) of this simpler implementation is lower (worst) and the resulting error *θ̂ᵢ* is then higher, i.e. $\left|{\hat{θ}}_{i}\right| > \left|{{θ}_{ι}}^{˜}\right|$. In consequence, proving the correctness of the transformed computer program with this simpler implementation *f̂ᵢ* with the given accuracies necessarily implies the correctness of the initial input program.

This technique allows for the use of alternative implementations that are more suitable for verification, while maintaining the integrity of the program's functionality. This need is highlighted by the increasing demand for dependable verification methods in important areas such as factory automation, where ensuring the accuracy and reliability of program execution is of great importance.

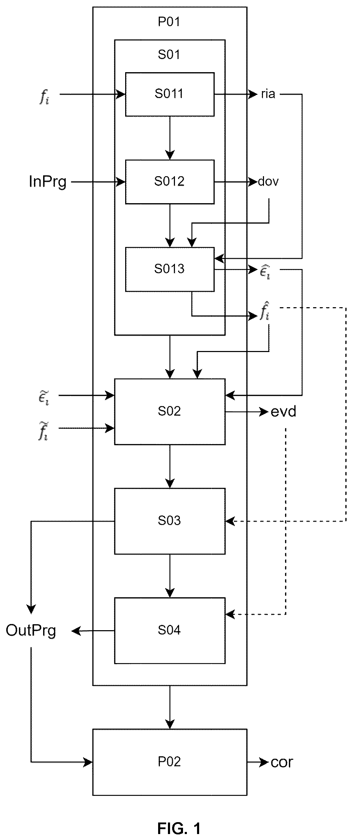

The figure 1 illustrates the steps of the example implementation of the proposed technique. The computer program verification method comprises:
- the computer program transformation phase P01 in which the input program InPrg that comprises the function call to the abstract mathematical function *fᵢ* is transformed in the output program OutPrg, which comprises the call to the lower precision implementation *f̂ᵢ* of the mathematical function *fᵢ* and the error verification directives evd linked to the lower precision implementation *f̂ᵢ* of the mathematical function *fᵢ*,
- the computer program verification phase P02 in which the output program OutPrg is provided to a formal verification module FVM which also uses the error verification directives evd to ensure correctness cor of the input program InPrg.

According to the disclosure, the computer program transformation phase P01 may comprises, depending on the implementation:
- determining S01, from the input program InPrg, the lower precision implementation *f̂ᵢ* of the mathematical function *fᵢ* and the computing error accuracy $\hat{{ϵ}_{ι}}$ of the lower precision implementation *f̂ᵢ*,
- generating S02 the error verification directives evd at least from the computing error accuracy $\hat{{ϵ}_{ι}}$ of the lower precision implementation *f̂ᵢ*.
- generating S03 the output program OutPrg in which the function call to at least one abstract mathematical function *fᵢ* is replaced by the corresponding function call to the of the lower precision implementation *f̂ᵢ,*
- adding S04 the error verification directives evd to the output program OutPrg.

In addition, determining S01, from the input program InPrg, the lower precision implementation *f̂ᵢ* of the mathematical function *fᵢ* and the computing error accuracy $\hat{{ϵ}_{ι}}$ of the lower precision implementation *f̂ᵢ* comprises:
- determining S011 the required internal accuracy of the abstract mathematical function *fᵢ*, implemented in the input program InPrg, for example to reach a target global accuracy TGA of the computer program,
- determining S012 the domain of values input variables while calling the abstract mathematical function *fᵢ*,
- selecting S013 the lower precision implementation *f̂ᵢ* of the mathematical function *fᵢ* as a function of the required internal accuracy and as a function of the domain of values input variables, selecting further providing the computing error accuracy $\hat{{ϵ}_{ι}}$. This selection can be done among preexisting versions of a set of lower precision implementation *f̂ᵢ* or can be done just in time by generating a lower precision implementation *f̂ᵢ* dedicated to this verification.

All or part of the determination step S01 can be processed by an Oracle, this name being used for a determination module which implements all or part of the previous steps. In some implementations, the oracle may only provide the required accuracies for the lower precision implementation *f̂ᵢ* of the mathematical function *fᵢ*.

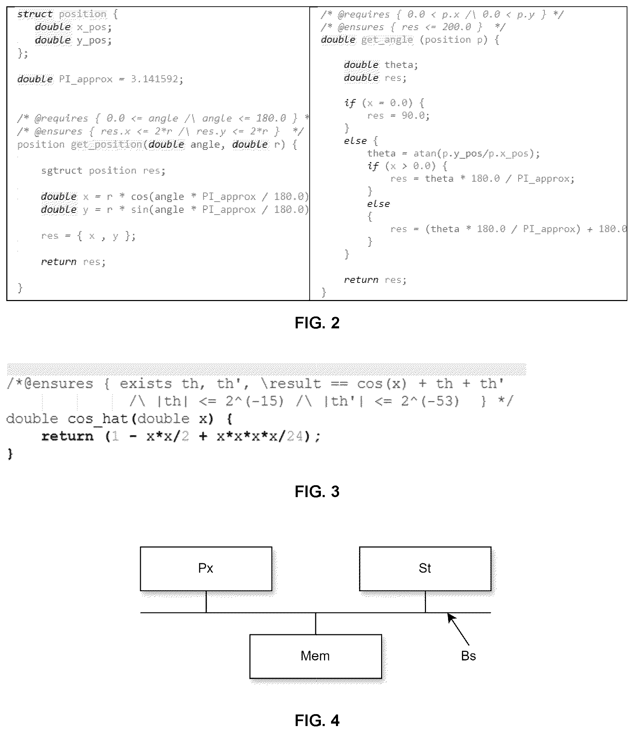

In the following paragraphs, an example implementation for a sample input program is detailed. The sample program is illustrated in relation with figures 2. This sample input program comprises a structure declaration, a constant for PI evaluation, and two functions (get_position() and get_angle()) each preceded by some preexisting specifications (between /* ... */). These preexisting specifications are introduced either by a programmer or by other automated means. For instance, if a function like get_angle() is called in another program, a domain inference technique like abstract interpretation can determine the domain of its inputs, which become an hypothesis ("requires") on the get_angle() function.

Here the program is written in the C language, with its specification written in a pseudo specification language. The @requires clauses correspond to hypotheses and @ensures clauses correspond to proof obligations under these hypotheses. It can be noticed that this program call three mathematical functions: *cos(), sin() and atan().*

It is supposed, also that the implementation architecture in which all mathematical functions are correctly rounded (only one rounding from the abstract mathematical function), *i.e.,* that ${{ϵ}_{atan}}^{˜} = {2}^{- 53} , {{ϵ}_{cos}}^{˜} = {2}^{- 53} , {{ϵ}_{sιn}}^{˜} = {2}^{- 53}$.

The Oracle module will provide the fact that, for proving the proof obligations of the program, low accuracies are sufficient for *cos(), sin()* and *atan()* functions, so that $\hat{{ϵ}_{atan}} = {2}^{- 15} , \hat{{ϵ}_{cos}} = {2}^{- 15} , \hat{{ϵ}_{sιn}} = {2}^{- 15}$.

In this example implementation the following steps occur:
Extraction of required concrete implementations: the first step consists in extracting, from the list of functions calls *fᵢ* in the program and the mathematical library of the architecture, a set of concrete functions implementations ${{f}_{ι}}^{˜}$, together with their accuracies ${{ϵ}_{ι}}^{˜}$. In certain embodiments, these accuracies are formally proven. For instance, in the program example, it is supposed that the architecture has a mathematical library including ten functions, and isolation is made of the implementations of ${cos \left(\right)}^{˜}$, ${sιn \left(\right)}^{˜}$ and ${atan \left(\right)}^{˜}$*.*

Domains analysis: for each function call of the program, a domain analysis technique, typically abstract interpretation is implemented to determine the domains of possible inputs of these functions (whatever the functions are mathematical ones or not) in order to obtain the domains of possible inputs of the used mathematical functions.

For instance, in the program example, *cos*() and *sin*() are called on expression angle*PI_approx/180. As angle is by hypotheses between 0 and 180, a valid domain for this expression is then [0;Pl_approx].

Selection of simpler functions implementations: in this example the oracle module provides required accuracies $\hat{{ϵ}_{ι}}$ of the different functions appearing in the program, that are deemed to be sufficient to prove the properties of the program specification. From these required accuracies and the domains computed at previous step, one can use a synthesis tool, *e.g.*, Metalibm, that provides adequate functions implementations $\hat{{f}_{ι}}$ to satisfy accuracies $\hat{{ϵ}_{ι}}$ on the identified input domains of *fᵢ* in the program. In certain examples, the accuracy of each simpler function implementation can be formally proved, using automatic provers like Gappa or Coqlnterval, or proof assistants like Coq, Isabelle, HOL, ACL2 or PVS.

In the program example, to satisfy a 2⁻¹⁵ accuracy on $\hat{sιn \left(\right)}$ and $\hat{cos \left(\right)}$ functions, a simple Taylor expansion following argument reductions is satisfactory.

Symbolic values computations: since the final objective of the technique is to verify properties of the program that will execute the concrete implementations ${{f}_{ι}}^{˜}$ of the mathematical functions *fᵢ*, proof has to be made that this is effectively the case.

For all *x* of the input domain, $\left|{{f}_{ι}}^{˜}\left(x\right)-{f}_{i}\left(x\right)\right| \leq {{ϵ}_{ι}}^{˜}$. The technique has identified simpler functions $\hat{{f}_{ι}}$ such that $\left|\hat{{f}_{ι}}\left(x\right)-{f}_{i}\left(x\right)\right| \leq \hat{{ϵ}_{ι}}$*.* By triangular inequality, $\left|{{f}^{˜}}_{i}\left(x\right)-{\hat{f}}_{i}\left(x\right)\right| \leq \left|{{f}^{˜}}_{i}\left(x\right)-{f}_{i}\left(x\right)\right| + \left|{\hat{f}}_{i}\left(x\right)-{f}_{i}\left(x\right)\right| \leq {{ϵ}_{ι}}^{˜} + \hat{{ϵ}_{ι}}$

This illustrates the fact that the two implementations (the concrete "architecture" and simpler ones) could have errors that have different signs for some inputs. So, one can deduce that there exist *θ̃ᵢ* and *θ̂ᵢ* such that ${{f}_{ι}}^{˜} \left(x\right) = \hat{{f}_{ι}} \left(x\right) + {{θ}^{˜}}_{i} + {\hat{θ}}_{i}$ with $\left|\hat{{θ}_{ι}}\right| < \hat{ϵ}$ and $\left|{{θ}_{ι}}^{˜}\right| < {ϵ}^{˜}$*.*

For instance, in the program example, ${cos}^{˜} \left(x\right) = \hat{cos} \left(x\right) + {{θ}_{cos}}^{˜} + \hat{{θ}_{cos}}$ with $\left|\hat{{θ}_{cos}}\right| < {2}^{- 15} , \left|{{θ}_{cos}}^{˜}\right| < {2}^{- 53}$. In other words, the distance between ${cos}^{˜} \left(x\right)$ and *cos*(*x*) is at most < *ε̃*, i.e. a *θ̃_{cos}* whose absolute value is less than *ε̃*. The distance between *cos*(*x*) and *cos*(*x*) is at most *ε̂*, i.e. a $\hat{{θ}_{cos}}$ whose absolute value is less than *ε̂*. So the distance between ${cos}^{˜} \left(x\right)$ and $\hat{cos} \left(x\right)$ is (at most) the sum of two values ${{θ}_{cos}}^{˜} + \hat{{θ}_{cos}}$, respectively less than *ε̃ + ε̂* (in absolute value).

Program transformation: according to this embodiment, in the original program to be proved, the transformation is operated by replacing calls to *fᵢ* by calls to ${{f}_{ι}}^{˜}$ where the body of ${{f}_{ι}}^{˜}$ is not given and its specification is to be equal to $\hat{{f}_{ι}} \left(x\right) + {{θ}^{˜}}_{i} + {\hat{θ}}_{i}$ for some arbitrary ${{θ}_{ι}}^{˜}$ and *θ̂ᵢ* with $\left|\hat{{θ}_{ι}}\right| < \hat{ϵ}$ and $\left|{{θ}_{ι}}^{˜}\right| < {ϵ}^{˜}$.

In the program example, the transformation is illustrated by fig 3, for the cos () function.

### Formal proof

The specification of the program is then formally proved using these definitions of the functions and the directives for asserting the correctness of the approximations made by the lower accuracies (simpler implementations) functions. As the simpler implementations are supposed to be simple (polynomial evaluations) and sufficient for the proof to succeed (result of the oracle), the formal proof is possible, using tools like Why3 or CBMC.

Hence, several categories of tools can be used for this purpose.

In one hand, tools like Why3 are based on deductive verification. From a program and its specification (the already present directives, and the added directives of the program transformation phase), the principle of deductive verification is to derive the set of mathematical proof obligations, whose correctness is sufficient to ensure that the program satisfies its specification. These proof obligations are then discharged to automatic theorem provers, e.g. satisfiability modulo theories (SMT) solvers like Z3 or cvc5.

In the other hand, tools like CBMC are based on (bounded) model-checking, based on an exhaustive exploration of the mathematical model of the program. The exploration of large models is made possible by using abstraction to group states in equivalence classes or taking advantage of symmetry in this model.

As explained earlier, both the automated provers used in deductive verification and the checkers used in model-checking have limited capabilities. The transformed program obtained from transformation phase P01 is accessible to them (which allows obtaining the expected verification) while the original program is out of their capabilities.

Hence according to a specific view, the disclosure relates to a formal computer program verification, the method comprising a transformation of an original program into a controlled transformed program, the controlled transformed program being usable by prover tools, to assert correctness of the controlled transformed program on the basis of the strict verification directives obtained through transformation, the strict verification directive being deduced from the simpler implementation chosen for enabling the use of the formal tools..

The computer implemented program verification method is carried out by a computer system or apparatus (represented in figure 4). In preferred embodiments, the computer system comprises one or more processors Px (which may belong to a same computer or to different computers) and one or more storage memories St (magnetic hard disk, optical disk, electronic memory, or any computer readable storage medium) in which a computer program product is stored, in the form of a set of program-code instructions to be executed in order to implement all or part of the steps of the computer implemented program verification method. The computer program product is loaded into an execution memory Mem, which allows the processor Px to execute the computer implemented program verification method. These components are connected together thru a bus Bs.

Alternatively, or in combination thereof, the computer system can comprise one or more programmable logic circuits (FPGA, PLD, etc.), and/or one or more specialized integrated circuits (ASIC), etc., adapted for implementing all or part of said steps of the computer implemented method 10. In other words, the computer system comprises a set of means configured by software (specific computer program product) and/or by hardware (processor, FPGA, PLD, ASIC, etc.) to implement the steps of the computer implemented program verification method.

## Claims

1. A computer program verification method, the computer program verification method comprising,
- a computer program transformation phase (P01) in which an input program (InPrg) that comprises at least one function call to at least one abstract mathematical function (*fᵢ*) is transformed in *an output program (OutPrg), the output program (OutPrg) comprising at least one call a lower precision implementation *f̂ᵢ* of the at least one mathematical function *fᵢ* and at least one error verification directives (evd) linked to the lower precision implementation *f̂ᵢ* of the at least one mathematical function *fᵢ*,
- a computer program verification phase (P02) in which the output program (OutPrg) is provided to a formal verification module (FVM), the formal verification module (FVM) using the error verification directives (evd) to ensure correctness (cor) of the input program (InPrg).

2. The computer program verification method according to claim 1, wherein the computer program transformation phase (P01) comprises:
- determining (S01), from the input program (InPrg), the lower precision implementation *f̂ᵢ* of the at least one mathematical function *fᵢ* and a computing error accuracy (*ε̂ₗ*) of the lower precision implementation *f̂ᵢ*,
- generating (S02) the error verification directives (evd) at least from the computing error accuracy (*ε̂ₗ*) of the lower precision implementation *f̂ᵢ*.

3. The computer program verification method according to claim 2, wherein generating (S02) the error verification directives (evd) further uses a computing error accuracy (*ε̃ₗ*) of a computing architecture implementation ${{f}_{ι}}^{˜}$ of the at least one mathematical function *fᵢ*.

4. The computer program verification method according to claim 1, wherein determining (S01), from the input program (InPrg), the lower precision implementation *f̂ᵢ* of the at least one mathematical function *fᵢ* and the computing error accuracy (*ε̂ₗ*) of the lower precision implementation *f̂ᵢ* comprises:
- determining (S011) a required internal accuracy (ria) of the at least one abstract mathematical function (*fᵢ*), implemented in the input program (InPrg),
- determining (S012) at least one domain of values (dov) input variables while calling the at least one abstract mathematical function (*fᵢ*),
- selecting (S013) the lower precision implementation *f̂ᵢ* of the at least one mathematical function *fᵢ* as a function of the required internal accuracy (ria) and as a function of the at least one domain of values (dov) input variables, selecting further providing the computing error accuracy (*ε̂ₗ*).

5. The computer program verification method according to any of claim 2 to 4, wherein the computer program transformation phase (P01) further comprises:
- generating (S03) the output program (OutPrg) in which the at least one function call to at least one abstract mathematical function (*fᵢ*) is replaced by at least one corresponding function call to the of the lower precision implementation *f̂ᵢ*,
- adding (S04) the error verification directives (evd) to the output program (OutPrg).

6. The computer program verification method according to any of the preceding claims, wherein the at least one error verification directives (evd) comprises for each lower precision implementation *f̂ᵢ* of the at least one mathematical function *fᵢ*, at least one representation of an operation to execute by the formal verification module (FVM) to ensure correctness (cor) of the input program (InPrg).

7. The computer program verification method according to claim 6, wherein, for a given lower precision implementation *f̂ᵢ* of one mathematical function *fᵢ*, the representation of the operation to execute by the formal verification module (FVM) comprises:
- at least one error value checking directive representing the maximum error *θ̂ᵢ* made for the given lower precision implementation *f̂ᵢ* of the mathematical function *fᵢ*,
- an error verification pragma.

8. A computer program verification apparatus, the computer program verification apparatus comprising,
- a computer program transformation module (P01) in which an input program (InPrg) that comprises at least one function call to at least one abstract mathematical function (*fᵢ*) is transformed in an output program (OutPrg), the output program (OutPrg) comprising at least one call a lower precision implementation *f̂ᵢ* of the at least one mathematical function *fᵢ* and at least one error verification directives (evd) linked to the lower precision implementation *f̂ᵢ* of the at least one mathematical function *fᵢ*,
- a computer program verification module (P02) by which the output program (OutPrg) is provided to a formal verification module (FVM), the formal verification module (FVM) using the error verification directives (evd) to ensure correctness (cor) of the input program (InPrg).

9. Computer program product comprising instructions which, when executed by at least one processor, configure said at least one processor to carry out a method according to any one of claims 1 to 7.

10. Computer-readable storage medium comprising instructions which, when executed by at least one processor, configure said at least one processor to carry out a method according to any one of claims 1 to 7.

11. System for verifying the correctness of a computer program, said system comprising at least one processor and at least one memory, wherein the at least one processor is configured to carry out a computer program verification method according to any one of claims 1 to 7.
